(19) Europäisches Patentamt
European Patent Office
Office européen des brevets

(11) EP 0 595 082 B1

(12) **EUROPÄISCHE PATENTSCHRIFT**

(45) Veröffentlichungstag und Bekanntmachung des Hinweises auf die Patenterteilung:
**06.05.1999 Patentblatt 1999/18**

(51) Int Cl.[6]: **C08L 67/00**, C08L 77/12
// (C08L67/00, 101:02),
(C08L77/12, 101:02)

(21) Anmeldenummer: **93116150.9**

(22) Anmeldetag: **06.10.1993**

(54) **Thermoplastisch verarbeitbare thermotrope Massen**

Thermoplastically processable thermotropic moulding composition

Composition à mouler thermotropique thermoplastiquement façonnable

(84) Benannte Vertragsstaaten:
**BE DE FR GB IT**

(30) Priorität: **19.10.1992 DE 4235136**

(43) Veröffentlichungstag der Anmeldung:
**04.05.1994 Patentblatt 1994/18**

(73) Patentinhaber: **BAYER AG**
**51368 Leverkusen (DE)**

(72) Erfinder:
- **Wehrmann, Rolf, Dr.**
**D-47800 Krefeld (DE)**
- **Karbach, Alexander, Dr.**
**D-47800 Krefeld (DE)**
- **Elsner, Thomas, Dr.**
**D-40593 Düsseldorf (DE)**
- **Tappe, Peter, Dr.**
**D-47829 Krefeld (DE)**

(56) Entgegenhaltungen:
**EP-A- 0 470 557**
**EP-A- 0 484 105**
**EP-A- 0 492 976**
**WO-A-92/18568**
**DE-A- 3 900 714**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 0 595 082 B1

**Beschreibung**

Die Erfindung betrifft neue thermoplastisch verarbeitbare thermotrope Massen aus Polykondensaten und anderen funktionalisierten Polymeren, und deren Verwendung zur Herstellung von Formkörpern.

Die erfindungsgemäßen thermoplastisch verarbeitbaren thermotropen Massen weisen verbesserte mechanische Eigenschaften, wie beispielsweise, Modul, Festigkeiten und Schlagzähigkeiten auf.

Thermotrope Polykondensate, wie z.B. Polyester, Polyesteramide und Polyestercarbonate, sind bekannt und in der Literatur beschrieben, siehe dazu L. Chapoy in Recent Advances in Liquid Crystalline Polymers, Elsvier, Appl. Sci. Publishers, 1985.

Stand der Technik ist, daß sich thermotrope Polymere durch Scher- und Dehnströmungen im Schmelzezustand sehr leicht orientieren lassen. Daraus resultiert eine hohe Molekülorientierung im Festkörper. Deshalb weisen die Formkörper anisotrope mechanische Eigenschaften mit hohen Zug-E-Moduli, Zugfestigkeiten und geringen Dehnungen und geringer Schlagzähigkeit auf.

Aufgabe der Erfindung war es daher, Formkörper aus thermotropen Polykondensaten mit verbesserter Eigenschaftsverteilung ohne drastische Einbuße von Steifigkeit und Festigkeit bereitzustellen.

Die Vernetzung von Polymeren auf molekularem Niveau ist Stand der Technik. Sie wird bei der Herstellung von Duromeren genutzt. Die vernetzten Produkte verfügen häufig über hohe thermische und chemische Beständigkeiten. Häufig sind sie jedoch nicht mehr thermoplastisch verarbeitbar und besitzen nur sehr geringe Dehnbarkeiten und eine unbefriedigende Schlagzähigkeit. Beispiele für derartige Systeme sind die bekannten Epoxidharze.

Neben diesen Systemen stellen Elastomere eine weitere Gruppe von vernetzten Polymeren dar. Sie verfügen zwar über z.B. hohe Dehnbarkeiten und eine gute Arbeitsaufnahme, besitzen aber häufig eine unzureichende Temperaturstabilität und eine geringe Wärmeformbeständigkeit und Dauergebrauchstemperatur.

Um die thermoplastische Verarbeitbarkeit erhalten zu können, müßte eine Vernetzung auf übermolekularem Niveau stattfinden Polymere zeichnen sich durch unterschiedlich ausgeprägte Überstrukturen aus (H.G. Elias in Makromoleküle, Bd. 1; 1990, Hüthig & Wepf Verlag). Es bilden sich Faltkristalle und Mizellenkristalle. Zwischen den kristallinen Bereichen sind amorphe Bereiche zu finden, die keine Fernordnung wie die Kristalle aufweisen. Die amorphen Bereiche stellen bei mechanischer Beanspruchung Schwachstellen dar, die durch eine Vernetzung verstärkt werden können. Bei den Mizellen liegen die Moleküle vorwiegend orientiert vor, so daß die amorphen Bereiche nicht wie bei den Faltkristallen die Molekülrückfaltungen enthalten. Auch hier ist eine Überbrückung der amorphen Schwachstellen durch Vernetzung möglich. Teilkristalline Polymere bilden aus den Faltkristallen eine sphärolithische Überstruktur. Die Grenzflächen zwischen den Sphärolithen bilden ebenfalls Schwachstellen in dem Gefüge, da bei zu geringem Molekulargewicht der Zusammenhalt zwischen den Sphärolithen nicht ausreicht und bei geringer Belastung schon Rißbildung einsetzt und entsprechende Formteile vorzeitig versagen.

Die den Mizellenkristallen entsprechenden Überstrukturen sind fibrilläre Strukturen in Molekülrichtung. Die interfibrillären Bereiche stellen ebenfalls bei mechanischer Beanspruchung Schwachstellen dar, die durch eine molekulare Überbrückung verstärkt werden könnten. Die sphärolitischen Strukturen treten bei allen teilkristallinen Polymeren mit flexiblen Molekülen auf (H.B. Elias in Makromoleküle, Bd. 1; 1990, Hüthig & Wepf, Verlag).

Insbesondere die thermotropen Polykondensate bilden durch Zusammenlagerung der Fibrillen eine weitere schichtartige Überstruktur. Diese Schichtstrukturen stellen ebenfalls eine Schwachstelle dar, die einer Vernetzung zugänglich sein könnte. Durch den Schichtaufbau erhalten Formteile eine besonders hohe Schlagzähigkeit, die aber erst bei einer ausreichenden Ankopplung der Schichten untereinander genutzt werden kann.

Beispiele für flexible Moleküle sind Polyethylen, Polypropylen, Polyester, Polycarbonat, Polyphenylensulfid, Polyamide usw. Die fibrillären Strukturen treten bei steifkettigen Molekülen auf; diese Moleküle bilden Mesophasen aus und weisen in der Schmelze flüssigkristalline Eigenschaften auf. Formteile aus thermotropen Polykondensaten weisen sehr geringe Querfestigkeiten auf und sind deshalb für sehr viele technische Anwendungen nicht geeignet Beispiele für flüssigkristalline Polymere sind LC-Polyester, LC-Polyestercarbonate, LC-Polyesteramide usw.

Gegenstand der Erfindung sind modifizierte thermoplastisch verarbeitbare thermotrope Massen bestehend aus

A) thermotropen Polykondensaten, die Struktureinheiten haben, welche aus folgenden Verbindungen stammen :

- a) aromatische Hydroxycarbonsäuren
- b) aromatische Aminocarbonsäuren
- c) Diphenole und/oder aliphatische Diole
- d) Aminophenole
- e) aromatische Dicarbonsäuren und/oder aliphatische Dicarbonsäuren
- f) gegebenenfalls Kohlensäure oder Kohlensäurederivate,

wobei der Anteil an aromatischen Hydroxycarbonsäuren 40 - 85 Mol-%, der Anteil an aromatischen Aminocarbonsäuren gegebenenfalls 0 - 40 Mol-% beträgt, der Anteil an Diphenolen und/oder aliphatischen Diolen 60 - 15 Mol-% beträgt, der Anteil der Aminophenole gegebenenfalls 0 - 25 Mol-% und

wobei aromatische Dicarbonsäuren und/oder aliphatische Dicarbonsäuren bzw. Kohlensäureäquivalente in äquimolaren Mengen von 60- 15 Mol.-% zu den Diphenolen und/oder aliphatischen Diolen und den Aminophenolen eingesetzt werden, wobei der Anteil der Carbonatgruppen zwischen 0 und 30 Mol-% liegen kann,
und

B) funktionalisierten Polymerisaten, ausgewählt aus der Gruppe der Polybutadienöle, Siliconöle, Siloxane, Polyvinylalkohole, Polyvinylacetate, Polyvinylacetale, Polyvinylpropionat, Copolymere aus Ethylen-Acrylsäure-(t-Alkyl)-ester, Ethylen-Glycidylacrylat, Allylglycidylether-Acrylsäure-(t-Alkyl)-ester, Ethylen-Acrylsäure-(ester)-Maleinsäureanhydrid oder Ethylen-Maleinsäureanhydrid,

wobei die genannten Polymerisate als reaktive Gruppen entlang der Polymerhauptkette Doppel- oder Dreifachbindungen, Amino-, Glycidyl-, Hydroxy-, Carböxy-, Carbonat-, Ester-, Anhydrid- oder Urethangruppen enthalten,

wobei der Anteil der Komponente B) 0,02 bis 3 Gew.-% beträgt (bezogen auf 100 Gew.-% Komponente A) und wobei die Formmassen gegebenenfalls Farbstoffe und/oder Pigmente enthalten.

Aromatische Dicarbonsäuren und/oder aliphatische Dicarbonsäuren bzw. Kohlensäureäquivalente werden in äquimolaren Mengen zu den Diphenolen und/oder aliphatischen Diolen und den Aminophenolen eingesetzt, also 60-15 Mol-%, vorzugsweise 50-20 Mol-%, wobei der Anteil der Carbonatgruppen zwischen 0 und 30 Mol-% liegen kann.

Als aromatische Hydroxycarbonsäuren a) kommen z.B. Verbindungen der Formeln

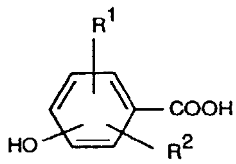 und 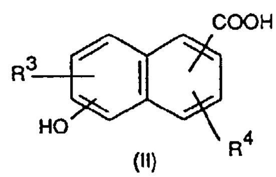

(I) (II)

worin

R¹ bis R⁴ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten und die Valenzen zwischen Kern und Hydroxylgruppe sowie zwischen Kern und Carboxylgruppe einen Winkel von 45 bis 180° bilden,

in Frage.

Bevorzugte aromatische Hydroxycarbonsäuren (a) sind z.B. 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Hydroxybenzoesäure, 6-Hydroxy-napthaoesäure, 4-Hydroxy-3-phenoxybenzoesäure, 6-Hydroxy-5-chlor-2-naphtoesäure, 6-Hydroxy-5-methyl-2-naphthoesäure, 6-Hydroxy-5-methoxy-2-naphthaoesäure, 6-Hydroxy-4,7-dichlor-2-naphthoesäure und 2-Hydroxybenzoesäure, besonders bevorzugt sind 4-Hydroxybenzoesäure und 6-Hydroxynaphthoesäure.

Als gegebenenfalls substituierte 3-Hydroxybenzoesäuren (a) werden z.B. genannt: 3-Hydroxy-4-methylbenzoesäure, 3-Hydroxy-4-phenylbenzoesäure, 3-Hydroxy-2-ethylbenzoesäure, 4-Chlor-3-hydroxybenzoesäure, 4-Brom-3-hydroxybenzoesäure, 3-Hydroxy-4-methoxybenzoesäure, 3-Hydroxy-4-phenoxybenzoesäure, 3-Hydroxy-2-methoxybenzoesäure und 3-Hydroxybenzoesäure.

Besonders bevorzugte aromatische 3-Hydroxycarbonsäuren (a) sind unsubstituierte Hydroxycarbonsäuren, wie 3-Hydroxybenzoesäure.

Als aromatische Aminocarbonsäuren b) kommen z.B. Verbindungen der Formeln

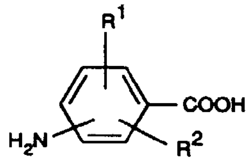

und

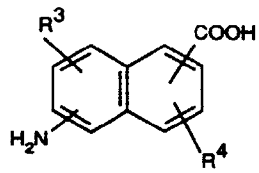

$R^1$ bis $R^4$ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten und die Valenzen zwischen Kern und Aminogruppe sowie zwischen Kern und Carboxylgruppe einen Winkel von 45 bis 180° bilden,

in Frage.

Bevorzugte aromatische Aminocarbonsäuren sind 2-Aminobenzoesäure, 3-Aminobenzoesäure, 4-Aminobenzoesäure, 4-Chloranthranilsäure, 5-Chloranthranilsäure, 3-Amino-chlorbenzoesäure, 3-Amino-4-methylbenzoesäure, 3-Amino-4-methylbenzoesäure, 4-Amino-3-methylbenzoesäure, 4-Amino-3-phenylbenzoesäure, 3-Brom-4-aminobenzoesäure, 4-Amino-3-methoxybenzoesäure, 6-Aminonaphthoesäure, 4-Amino-3-phenoxybenzoesäure, 6-Amino-5-chlor-2-naphtoesäure, 6-Amino-5-methyl-2-naphthoesäure, 6-Amino-5-methoxy-2-naphthaoesäure, 6-Amino-4,7-dichlor-2-naphthoesäure, besonders bevorzugt sind 4-Aminobenzoesäure und 6-Aminonaphthoesäure.

Besonders bevorzugte aromatische Aminocarbonsäuren sind 4-Aminobenzoesäure, 3-Aminobenzoesäure und 6-Amino-2-naphthoesäure.

Als Diphenole c) kommen solche der Formel

$$HO - Z - OH \qquad (III)$$

in Frage, worin

Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit n = 2-4 verbundene Phenylenreste.

Bevorzugte Diphenole c) sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2'-Dimethyl-4,4'-dihydroxydiphenyl, 3,3',5,5'-Tetramethyl-4,4'-dihydroxydiphenyl, 3,5'-Dimethoxy-4,4'-dihydroxydiphenylether, 1,2-(2-Chlor-4-hydroxyphenyl)-ethan, 4-Methoxy-2,6-dihydroxynaphthalin, Resorcin, 3,4'-Dihydroxydiphenyl, 3,4'-Dihydroxydiphenylether, 3,4'-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole c) sind Hydrochinon und 4,4'-Dihydroxydiphenyl.

Als Aminophenole d) kommen solche der Formel

$$HO - Z - NH_2$$

in Frage, worin

Z einen zweiwertigen ein- oder mehrkernigen aromatischen Rest mit 6-30 C-Atomen bedeutet, wobei Z derart gebaut ist, daß die OH-Gruppe und $NH_2$-Gruppe direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit n = 2-4 verbundene Phenylenreste.

Bevorzugte Aminophenole sind:

3-Aminophenol,
5-Amino-2-chlorphenol,
4-Aminophenol,
3-Amino-2-methylphenol,
3-Amino-4-methylphenol,
5-Amino-1-naphthol,
6-Amino-1-naphthol,
5-Amino-2-naphthol,
7-Amino-2-naphthol,
8-Amino-2-naphthol,
6-Amino-2-naphthol,
4-Amino-1-hydroxybiphenyl.

Als aromatische Dicarbonsäuren e) kommen solche der Formel

$$HOOC - A - COOH \qquad (IV)$$

in Frage, worin

A einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Napthylen und Biphenylen auch durch Sauerstoff, Schwefel, Carbonyl, Sulfonyl, $C_1$-$C_4$-Alkylen oder $C_1$-$C_4$-Alkyliden, Cyclohexylen oder Cyclohexyliden oder $-O(CH_2)_nO-$ mit n = 1 - 4 verbundene Phenylenreste.

Bevorzugte aromatische Reste sind z.B. 1,4-Phenylen, 1,4-Naphthylen oder 4,4'-Bisphenylen, worin die beiden Bindungen sich koaxial in entgegengesetzte Richtungen erstrecken, oder 1,5-Naphthylen, 2,6-Naphthylen oder 3,5'-Bisphenylen, worin die beiden in entgegengesetzte Richtungen zeigenden Bindungen parallel zueinander verschoben sind, sowie 1,3-Phenylen, 1,3-, 1,6-, 1,7- oder 2,7-Naphthylen oder 3,4-Bisphenylen, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren e) sind z.B. 1,4-Naphthalindicarbonsäure, 1,5-Naphthalindicarbonsäure, 2,6-Naphthalindicarbonsäure, Biphenyl-4,4'-dicarbonsäure, Biphenyl-3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 1,3-Napthalindicarbonsäure, 1,6-Naphthalindicarbonsäure, 1,7-Naphthalindicarbonsäure, 2,7-Napthdin-dicarbonsäure, Biphenyl-3,4'-dicarbonsäure, Diphenylether-3,4'.dicarbonsäure, 4-Methylisophthalsäure, 5-Methylisophthalsäure, Diphenylether-4,4'-dichlor-3,3'-dicarbonsäure, Iso- und Terephthalsäure.

Besonders bevorzugte aromatische Dicarbonsäuren e) sind Iso- und Terephthalsäure.

Als Derivate zum Einbau der f) Carbonatgruppen seien genannt: Diarylcarbonate, wie Diphenylcarbonat, Ditolylcarbonat, Phenyl-tolyl-carbonat und Dinaphthalcarbonat, Dialkylcarbonate, wie Diethylcarbonat, Dimethylcarbonat, Dimethyldicarbonat und Diethyldicarbonat sowie Glykolcarbonat oder Neopentylcarbonat.

Ein bevorzugtes Derivat zum Einbau der f) Carbonatgruppen ist Diphenylcarbonat.

Beispiele für aliphatische Diole c) sind Ethylenglykol, Propylenglykol, Butandiol, Hexandiol, Decandiol, Cyclohexandimethanol, Cyclohexandiol, Dimerfettalkohole usw. Weiterhin kann sich die Komponente c) ableiten von Alkylenetherglykolen wie Diethylenglykol, Triethylenglykol, Polyethylenglykol oder ethoxylierten bzw. propoxylierten Bisphenolen.

Beispiele für aliphatische Carbonsäuren e) sind Propandicarbonsäure, Butandicarbonsäure, Pentandicarbonsäure, Malon-, Glutarsäure, Sebacinsäure, alicyclische Dicarbonsäuren wie Cyclohexandicarbonsäure, Dimerfettsäuren.

Die Katalysatormengen betragen vorzugsweise 0,001-1, insbesondere 0,01-0,2 Gew.-%, bezogen auf das Gesamtgewicht der eingesetzten Monomeren.

Die thermotropen Polykondensate (Komponente A) haben Molekulargewichte (Zahlenmittel) größer als 8.500 g/mol, vorzugsweise größer als 10.000 g/mol (bestimmt mittels GPC-Gelpermeationschromatographie).

Die Polyester können bei Temperaturen von 150 bis 380°C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Bei der Herstellung der erfindungsgemäßen thermotropen Polykondensate kann die Zugabe der flüssigkristallinen Verbindungen bis zum Erreichen eines Abspaltungsgrades von 95 % an flüchtigen Polykondensationsprodukt zu jedem beliebigen Zeitpunkt erfolgen. Vorzugsweise werden die flüssigkristallinen Verbindungen zu Beginn bei der Einwaage der Monomerbausteine zugegeben.

Die erfindungsgemäßen thermotropen Polykondensate zeichnen sich durch eine erhöhte thermische Stabilität und eine ausgezeichnete Schmelzviskositätsstabilität unter Verarbeitungsbedingungen aus.

Die Herstellung von LC-Polykondensaten ist in der Patentliteratur ausführlich beschrieben, z.B. in DE-OS 3 923 294, DE-OS 3 629 211, DE-OS 3 736 991, EP-A 345 869, EP-A 0 221 316.

Unter funktionalisierten Polymeren (Komponente B) sind Polymere zu verstehen, die zu weiteren Reaktionen befähigt sind. Die funktionalisierten Polymere sind daher Substanzen, die über reaktive Endgruppen oder entsprechende Gruppen entlang der Polymerhauptkette verfügen. Beispiele für reaktive Gruppen sind Doppel- oder Dreifachbindungen, Amino-, Glycidyl-, Hydroxy-, Carboxy-, Carbonat-, Ester-, Anhydrid- oder Urethangruppen. Bevorzugte reaktive Gruppen sind Carboxy-, Ester-, Anhyrid-, Hydroxy-Gruppen oder Glycidylgruppen.

Die in der vorliegenden Erfindung verwendeten Copolymerisate sind wie folgt aufgebaut:

a) 40 bis 100 Gew.-% mindestens eines α-Olefins mit 2 bis 8 C-Atomen,

b) 0 bis 50 Gew.-% eines Diens,

c) 0 bis 45 Gew.-% eines primären oder sekundären $C_1$-$C_{12}$-Alkylesters der Acrylsäure oder Methacrylsäure oder Mischungen derartiger Ester,

d) 0 bis 45 Gew.-% einer olefinisch ungesättigten Mono- oder Dicarbonsäure, die auch teilweise oder vollständig als Salz vorliegen kann und/oder einem funktionellen Derivat einer solchen Säure,

e) 0 bis 40 Gew.-% eines Epoxigruppen enthaltenden Monomeren.

Bei den Komponenten B) handelt es sich entweder um kommerziell erhältliche Produkte oder um Substanzen, die nach bekannten Methoden (vgl. Houben Weyl, Methoden der organischen Chemie Bd. 14/1 (1961), Bd. 14/2 (1963) bzw. Bd. E20 (1987 oder Ullmanns Encyklopädie der technischen Chemie, 3. Auflage 1963 Bd. 14) hergestellt werden können. Sie besitzen ein mittleres Molekulargewicht $\overline{M}_w$ von größer 1 000 g/mol (bestimmt durch GPC).

Der Anteil der Komponente B) in der thermotropen Masse beträgt bevorzugt 0,1 bis 2 Gew.-% bezogen auf 100 Gew.-% Komponente A)

Die erfindungsemäßen thermotropen Massen können mit bis zu 80 Gew.-%, bevorzugt 1 bis 75 Gew.-%, besonders bevorzugt 30-70 Gew.-%, bezogen auf das Gesamtgewicht der gefüllten Massen an Verstärkungs- und/oder Füllstoffen abgemischt werden. Stellvertretend für derartige Stoffe seien Glasfasern, Kohlefasern, Glimmer, Quarzgut, Kaolin, Calciumsilikat, Feldspat, Kreide und Leichtmetalle wie Aluminium und Magnesium genannt.

Weiterhin können für bestimmte Anwendungen Farbstoffe oder Pigmente wie Ruß, Titandioxid, Cadmiumsulfid, Ultramarinblau oder Phthalocyaninfarbstoffe in Mengen bis zu 10 Gew.-% zugesetzt werden.

Die erfindungsgemäßen thermotropen Massen werden in einem Verarbeitungsaggregat, z.B. einem Extruder oder Kneter, aus einer Mischung von thermotropen Polykondensaten und den o.g. funktionalisierten Polymeren erhalten.

Aus den thermotropen Massen können Formteile ausgezeichneter Steifigkeit und Zähigkeit, sehr hoher Wärmeformbeständigkeit und großer Dimensionsstabilität hergestellt werden.

Da die thermotropen Massen außerordentlich chemikalienresistent und flammwidrig sind, eignen sie sich besonders zur Herstellung von

- elektrotechnischen Artikeln, wie Isolatoren, gedruckte Schaltungen, Steckkontakte oder Armaturenteilen

- Teilen chem.-techn.-Apparate, wie Rohren, Reaktoren, Behälterauskleidungen, Gleitlagern oder Dichtungen

- Teilen der Flugzeuginnenausstattung

- Teilen medizinisch-techn.-Geräte sowie Bauteilen von Klimaanlagen und Ventilen.

Beispiele

Die Erfindung wird anhand nachfolgender Beispiele näher erläutert
Als Komponente A) wird in den Beispielen 1 bis 11 und im Vergleichsbeispiel jeweils Granulat eines LC-Polyesters - aufgebaut aus 75 Mol-% p-Hydroxybenzoesäure, 25 Mol-% 4,4-Dihydroxydiphenyl, 15 Mol-% Terephthalsäure und 10 Mol-% Isophthalsäure verwendet
Schmelzviskosität: 110 Pa•s bei 330°C und einer Scherrate von 1 000 $s^{-1}$.
Als Komponente (B) werden funktionalisierte Polymere eingesetzt (vgl. Tabelle 3).
Das Granulat des LC-Polyesters wird entweder in einer Lösung des jeweiligen funktionalisierten Polymers aufgeschlämmt und nach Abziehen des Lösemittels extrudiert oder es erfolgt bei dafür geeigneten funktionalisierten Polymeren eine gleichzeitige Beaufschlagung des Extruders mit dem LC-Polymer und dem funktionalisierten Polymer.
Es war nicht möglich, mit geeigneten Lösemitteln (Toluol und Methylenchlorid) die funktionalisierten Polymere nach der Compoundierung aus den erhaltenen erfindungsgemäßen thermotropen Massen zu extrahieren (48 Stunden Erhitzen unter Rückfluß).
Bei Beispiel 1 bis 9 beträgt der Zusatz an Komponente B jeweils 0,8 Gew.-%, bei Beispiel 10 und 11 jeweils 0,4 Gew.-%.
Die Biegeversuche wurden nach DIN 53 452 an 80 x 40 x 4 mm Normstäben durchgeführt.
Der Tabelle wird entnommen, daß die erfindungsgemäßen Beispiele über bessere mechanische Eigenschaften verfügen als das Vergleichsbeispiel.

Eingesetzte Komponenten B:

| | |
|---|---|
| Epolene® E 43: | Emulgierbares Polypropylenwachs von Eastman Chemical Company mit einer Säurezahl von 47 und einem Molekulargewicht (GPC) von $\overline{M}_n \approx 3\,900$ und $\overline{M}_w \approx 9\,100$. |
| Epolene® E 14: | Polyethylenwachs von Eastman Chemical Company mit einer Säurezahl von 16 und einem Molekulargewicht (GPC) von $\overline{M}_n \approx 1\,300$ und $\overline{M}_w \approx 3\,600$. |
| Dylark® 250: | Styrol-Maleinsäureanhydrid Copolymer von Arco Chemical mit einem MFI (Melt-Flow-Index) von 0,9 g/10 min. |
| Polybond® 1000: | Pfropfcopolymer aus Polypropylenhomopolymer und Acrylsäure von Krahn Chemie GmbH mit einem Acrylsäuregehalt von ca. 6 Gew.-%. |
| Lucalen® A 2920: | Terpolymer der BASF aus 4 % Acrylsäure, Butylacrylat und Ethylen mit einem Schmelzindex (190/2,16) von 6-8 g/10 min. |
| Lotader® AX 8660: | Terpolymer von Orkem, Norsolor S.A. aus Ethylen, Butylacrylat und ca 2 % Glycidylmethacrylat und einem Schmelzpunkt von ca. 76°C. |
| Polybond® 1021: | Polypropylen-Acrylsäure-Copolymer der Krahn Chemie GmbH mit einem Schmelzindex (230/2,16) von 40 g/10 min und einem Schmelzpunkt von 146°C. |
| Polyvest® C 75 bzw. C 150 | sind mit Carboxylgruppen funktionalisierte Polybutadiene der Hüls AG mit Molekulargewichten ($M_n$) von ca. 1 700 und Säurezahlen von 75 bzw. 150. |

Tabelle 1

| Beispiel | Komponente B | Menge Gew.-% | Biegefestigkeit $N/mm^2$ | Modul $N/mm^2$ | Schlagzähigkeit $KJ/m^2$ | Randfaserdehnung [%] |
|---|---|---|---|---|---|---|
| Vergl. | - | - | 154 | 16 400 | 25 | 2,6 |
| 1 | Lucalen A 2920 | 0,8 | 172 | 18 800 | 57 | 3 |
| 2 | Epolene E14 | 0,8 | 170 | 19 500 | 72 | 2,9 |
| 3 | Dylark 250 | 0,8 | 170 | 18 900 | 75 | 2,8 |
| 4 | Lotader AX 8660 | 0,8 | 169 | 18 300 | 58 | 3,5 |
| 5 | Epolene E 43 | 0,8 | 181 | 19 900 | 97 | 3,4 |
| 6 | Polybond 1000 | 0,8 | 159 | 14 900 | 54 | 4,4 |
| 7 | Polybond 1021 | 0,8 | 156 | 14 200 | 62 | 4,3 |
| 8 | Polyvest C150 | 0,8 | 170 | 19 200 | 67 | 3 |
| 9 | Polyvest C 75 | 0,8 | 171 | 19 800 | 62 | 2,9 |
| 10 | Polyvest C 150 | 0,4 | 173 | 19 900 | 65 | 2,9 |
| 11 | Polyvest C75 | 0,4 | 170 | 19 300 | 73 | 2,7 |

Oberflächenbeschaffenheit:

Die Platten weisen eine hellbeige Farbe ohne Marmorierung auf, während der Vergleichsversuch noch die LC-typische Oberflächenmarmorierung zeigt.

**Patentansprüche**

**1.** Thermoplastisch verarbeitbare thermotrope Massen, bestehend aus

A) thermotropen Polykondensaten die Struktureinheiten haben, welche aus folgenden Verbindungen stammen; ohne daß alle Struktureinheiten jeweils zwingend auftreten/enthalten sein mässen:

a) aromatische Hydroxycarbonsäuren

b) aromatische Aminocarbonsäuren

c) Diphenole und/oder aliphatische Diole

d) Aminophenole

e) aromatische Dicarbonsäuren und/oder aliphatische Dicarbonsäuren

f) gegebenenfalls Kohlensäure oder Kohlensäurederivate,

wobei der Anteil an aromatischen Hydroxycarbonsäuren 40 - 85 Mol-%, der Anteil an aromatischen Aminocarbonsäuren gegebenenfalls 0 - 40 Mol-% beträgt, der Anteil an Diphenolen und/oder aliphatischen Diolen 60 - 15 Mol-% beträgt, der Anteil der Aminophenole gegebenenfalls 0 - 25 Mol-% und

wobei aromatische Dicarbonsäuren und/oder aliphatische Dicarbonsäuren bzw. Kohlensäureäquivalente in äquimolaren Mengen von 60 - 15 Mol.-% zu den Diphenolen und/oder aliphatischen Diolen und den Aminophenolen eingesetzt werden, wobei der Anteil der Carbonatgruppen zwischen 0 und 30 Mol-% liegen kann,
und

B) funktionalisierten Polymerisaten, ausgewählt aus der Gruppe der Polybutadienöle, Siliconöle, Siloxane, Polyvinylalkohole, Polyvinylacetate, Polyvinylacetale, Polyvinylpropionat, Copolymere aus Ethylen-Acrylsäure-(t-Alkyl)-ester, Ethylen-Glycidylacrylat, Allylglycidylether-Acrylsäure-(t-Alkyl)-ester, Ethylen-Acrylsäure-(ester)-Maleinsäureanhydrid oder Ethylen-Maleinsäureanhydrid,

wobei die genannten Polymerisate als reaktive Gruppen entlang der Polymerhauptkette Doppel- oder Dreifachbindungen, Amino-, Glycidyl-, Hydroxy-, Carboxy-, Carbonat-, Ester-, Anhydrid- oder Urethangruppen enthalten,
wobei der Anteil der Komponente B) 0,02 bis 3 Gew.-% beträgt (bezogen auf 100 Gew.-% Komponente A) und wobei die Formmassen gegebenenfalls Farbstoffe und/oder Pigmente enthalten.

**2.** Formmassen gemäß Anspruch 1, worin Komponente B) Copolymerisaten aus

a) 40 bis 100 Gew.-% mindestens eines $\alpha$-Olefins mit 2 bis 8 C-Atomen,

b) 0 bis 50 Gew.-% eines Diens,

c) 0 bis 45 Gew.-% eines primären oder sekundären $C_1$-$C_{12}$-Alkylesters der Acrylsäure oder Methacrylsäure oder Mischungen derartiger Ester,

d) 0 bis 45 Gew.-% einer olefinisch ungesättigten Mono- oder Dicarbonsäure, die auch teilweise oder vollständig als Salz vorliegen kann und/oder einem funktionellen Derivat einer solchen Säure,

e) 0 bis 40 Gew.-% eines Epoxygruppen enthaltenden Monomeren entspricht.

**3.** Formmassen gemäß Anspruch 1, worin Komponente B) mit Carboxyl-, Hydroxyl- oder Aminogruppen funktionalisierten Polybutadienölen, Siliconölen oder Siloxanen, Ethylen-Acrylsäure-(t-Alkyl)-ester, Ethylen-Glycidylacrylat, Allylglycidylether-Acrylsäure-(t-Alkyl)-ester, Ethylen-Acrylsäure-(ester)-Maleinsäureanhydrid oder Ethylen-Maleinsäureanhydrid entspricht.

**4.** Formmassen gemäß Anspruch 1, worin Komponente B) in einer Menge von 0,05 bis 3 Gew.-% eingesetzt wird.

**5.** Formmassen gemäß Anspruch 1, worin Komponente B) in einer Menge von 0,1 bis 2 Gew.-% eingesetzt wird.

**6.** Verwendung der thermoplastisch verarbeitbaren thermotropen Massen gemäß Anspruch 1 zur Herstellung von Formkörpern.

**7.** Formteile, hergestellt aus Formmassen gemäß Anspruch 1.

**8.** Thermoplastisch verarbeitbare thermotrope Masse bestehend aus A) einem LC-Polymer aufgebaut aus 75 Mol%

p-Hydroxybenzolsäure, 25 Mol% 4,4-Dihydroxydiphenyl, 15 Mol% Terephthalsäure und 10 Mol% Isophthalsäure mit einer Schmelzviskosität von 110 Pas bei einer Scherrate von 1000 s-1 und B) Polyethylenwachs mit einer Säurezahl von 16 und einem Molekulargewicht (GPC) von $\overline{M}n \approx 1300$ und $\overline{M}w \approx 3600$, oder Polypropylenwachs mit einer Säurezahl von 47 und einem Molekulargewicht (GPC) von $\overline{M}n \approx 3900$ und $Mw \approx 9100$.

## Claims

**1.** Thermoplastically processable thermotropic compositions comprising

A) thermotropic polycondensates which have structural units which originate from the following compounds, without all the structural units each necessarily having to occur/be contained in the polycondensates:

a) aromatic hydroxycarboxylic acids

b) aromatic aminocarboxylic acids

c) diphenols and/or aliphatic diols

d) aminophenols

e) aromatic dicarboxylic acids and/or aliphatic dicarboxylic acids

f) optionally carbonic acid or carbonic acid derivatives

the content of aromatic hydroxycarboxylic acids being 40 - 85 mole%, the content of aromatic aminocarboxylic acids, if appropriate, being 0 - 40 mole%, the content of diphenols and/or aliphatic diols being 60 - 15 mole%, the content of aminophenols, if appropriate, being 0 - 25 mole%

aromatic dicarboxylic acids and/or aliphatic dicarboxylic acids or carbonic acid equivalents being employed in equimolar amounts of 60 - 15 mole% to the diphenols and/or aliphatic diols and the aminophenols, it being possible for the content of carbonate groups to be between 0 and 30 mole%
and

B) functionalized polymers chosen from the group consisting of polybutadiene oils, silicone oils, siloxanes, polyvinyl alcohols, polyvinyl acetates, polyvinyl acetals, polyvinyl propionate, copolymers of ethylene-acrylic acid (t-alkyl) ester, ethylene-glycidyl acrylate, allyl glycidyl ether-acrylic acid (t-alkyl) ester, ethylene-acrylic acid (ester)-maleic anhydride or ethylene-maleic anhydride

said polymers containing, as reactive groups along the main polymer chain, double or triple bonds or amino, glycidyl, hydroxyl, carboxyl, carbonate, ester, anhydride or urethane groups,

the content of component B) being 0.02 to 3 wt.% (based on 100 wt.% component A), and the moulding compositions comprising, if appropriate, dyestuffs and/or pigments.

**2.** Moulding compositions according to claim 1, wherein component B) corresponds to copolymers of

a) 40 to 100 wt.% of at least one $\alpha$-olefin having 2 to 8 C atoms,

b) 0 to 50 wt.% of a diene,

c) 0 to 45 wt.% of a primary or secondary $C_1$-$C_{12}$-alkyl ester of acrylic acid or methacrylic acid or mixtures of such esters,

d) 0 to 45 wt.% of an olefinically unsaturated mono- or dicarboxylic acid, which can also be partly or completely present as a salt, and/or a functional derivative of such an acid,

e) 0 to 40 wt.% of a monomer containing epoxide groups.

**3.** Moulding compositions according to claim 1, wherein component B) corresponds to polybutadiene oils, silicone oils or siloxanes, ethylene-acrylic acid (t-alkyl) ester, ethylene-glycidyl acrylate, allyl glycidyl ester-acrylic acid (t-alkyl) ester, ethylene-acrylic acid (ester)-maleic anhydride or ethylene-maleic anhydride functionalized with carboxyl, hydroxyl or amino groups.

**4.** Moulding compositions according to claim 1, wherein component B) is employed in an amount of 0.05 to 3 wt.%.

**5.** Moulding compositions according to claim 1, wherein component B) is employed in an amount of 0.1 to 2 wt.%.

**6.** Use of the thermoplastically processable thermotropic compositions according to claim 1 for the production of shaped articles.

**7.** Mouldings produced from moulding compositions according to claim 1.

**8.** Thermoplastically processable thermotropic composition comprising A) an LC polymer built up from 75 mole% p-hydroxybenzoic acid, 25 mole% 4,4-dihydroxydiphenyl, 15 mole% terephthalic acid and 10 mole% isophthalic acid having a melt viscosity of 110 Pas at a shear rate of $1{,}000 s^{-1}$ and B) polyethylene wax having an acid number of 16 and a molecular weight (GPC) of $\overline{M}n \approx 1{,}300$ and $\overline{M}w \approx 3{,}600$ or polypropylene wax having an acid number of 47 and a molecular weight (GPC) of $\overline{M}n \approx 3{,}900$ and $\overline{M}w \approx 9{,}1000$.

## Revendications

**1.** Masses thermotropes aptes au travail thermoplastique, consistant en

A) des polycondensats thermotropes à motifs de structure dérivant des composés suivants, sans que la présence de tous ces motifs de structure soit obligatoire :

a) des acides hydroxycarboxyliques artomatiques,
b) des acides aminocarboxyliques aromatiques,
c) des diphénols et/ou des diols aliphatiques,
d) des aminophénols,
e des acides dicarboxyliques aromatiques et/ou des acides dicarboxyliques aliphatiques,
f) le cas échéant l'acide carbonique ou des dérivés de l'acide carbonique, la proportion des acides hydroxycarboxyliques aromatiques étant de 40 à 85 mol %, la proportion des acides aminocarboxyliques aromatiques éventuels de 0 à 40 mol %, la proportion des diphénols et diols aliphatiques de 60 à 15 mol %, la proportion des aminophénols éventuels de 0 à 25 mol %, et
les acides dicarbodyliques aromatiques et/ou acides dicarboxyliques aliphatiques ou équivalents de l'acide carbonique sont mis en oeuvre en quantités équimoléculaires de 60 à 15 mol % par rapport aux diphénols et/ou diols aliphatiques et aminophénols, la proportion des groupoes carbonate pouvant aller de 0 à 30 mol %,

et
B) des polymères fonctionnalisés choisis parmi les huiles de polybutadiène, les huiles de cilicones, les siloxanes, les alcools polyvinyliques, les acétates de polyvinyle, les acétals polyvinyliques, le propionate de polyvinyle, les copolymères éthylène-acrylate de tert-alkyle, éthylène-acrylate de glyvcidyle, éther allylglycidylique-acrylate de tert-alkyle, éthylène-acide (ou ester) acrylique -anhydride maléique ou éthylène-anhydride maléique,
les polymères en question contenant en tant que sites réactifs, le long de la chaîne principale polymère, des doubles ou triples liaisons, des groupes amino, glycidyle, hydroxy, carboxy, carbonate, ester, anhydride ou uréthanne,
la proportion du composant B) représentant de 0,02 à 3 % en poids (pour 100 % en poids du composant A) et les matières à mouler contenant le cas échéant des colorants et/ou des pigments.

**2.** Matières à mouler selon la revendication 1, dans lesquelles le composant B) consiste en copolymères de

a) 40 à 100 % en poids d'au moins une $\alpha$-oléfine en $C_2$-$C_8$,
b) 0 à 50 % en poids d'un diène,
c) 0 à 45 % en poids d'un ester alkylique primaire ou secondaire en $C_1$-$C_{12}$ de l'acide acrylique ou méthacrylique ou d'un mélange de tels esters,

d) 0 à 45 % en poids d'un acide mono-ou dicarboxylique à insaturation oléfinique qui peut être en partie ou en totalité à l'état de sel, et/ou d'un dérivé fonctionnel d'un tel acide,
e) 0 à 40 % en poids d'un monomère à groupes époxy.

**3.** Matières à mouler selon la revendication 1, dans lesquelles le composant B) consiste en huiles de polybutadiène, huiles de silicones ou siloxanes fonctionnalisés par des groupes carboxyle, hydroxy ou amino, en copolymères éthylène-acrylate de tert-alkyle, athylène-acrylate de glycidyle, éther allylglycidylique-acrylate de tert-alkyle, éthylène-acide (ester)acrylique-anhydride maléique ou éthylène-anhydrique maléique.

**4.** Matières à mouler selon la revendication 1, dans lesquelles le composant B) est introduit en quantité de 0,05 à 3 % en poids.

**5.** Matières à mouler selon la revendication 1, dans lesquelles le composant B) est introduit en quantité de 0,1 à 2 % en poids.

**6.** Utilisation des masses thermotropes aptes au travail thermoplastique selon la revendication 1 pour la fabrication d'objets moulés.

**7.** Pièces moulées préparées à partir des matières à mouler selon la revendication 1.

**8.** Masses thermotropes aptes au travail thermoplastique consistant en A) un polymère à cristaux liquides constitué de 75 mol % d'acide p-hydroxybenzoïque, 25 mol % de 4,4-dihydroxydiphényle, 15 mol % d'acide téréphtalique et 10 mol % d'acide isophtalique, à une viscosité à l'état fondu de 110 Pa.s sous un cisaillement de 1 000 $s^{-1}$ et B) une cire de polyéthylène d'indice d'acide 16 et de poids moléculaire (GPC) $\overline{M}_n$ environ 1300 et $\overline{M}_w$ environ 3600 ou une cire de polypropylène d'indice d'acide 47, poids moléculaire (GPC) $\overline{M}_n$ environ 3900 et $\overline{M}_w$ environ 9100.